# EUROPEAN PATENT SPECIFICATION

(11) **EP 3 802 674 B1**
(45) Date of publication and mention of the grant of the patent: **12.07.2023**
(21) Application number: 19812407.5
(22) Date of filing: 29.05.2019
(51) Int. Cl.: C08J 5/04, C08J 5/10, C08L 67/02, B32B 27/12, B32B 3/12, B32B 5/12, B32B 5/18, B32B 5/24, B32B 5/28, B32B 15/14, B32B 21/10

(54) **FLAME RETARDANT CONTINUOUS FIBER REINFORCED THERMOPLASTIC TAPE**
FLAMMHEMMENDES FASERVERSTÄRKTES THERMOPLASTISCHES ENDLOSBAND
BANDE THERMOPLASTIQUE RENFORCÉE PAR DES FIBRES CONTINUES IGNIFUGE

(30) Priority: 31.05.2018 US 201862678550 P; 21.08.2018 US 201862720781 P; 05.10.2018 US 201862741902 P
(43) Date of publication of application: 14.04.2021
(73) Proprietor: Avient Corporation, Avon Lake, Ohio 44012 (US)
(72) Inventor: ELKOVITCH, Mark, Avon Lake, Ohio 44012 (US); AVAKIAN, Roger W., Avon Lake, Ohio 44012 (US); ZHOU, Jian, Avon Lake, Ohio 44012 (US); ZHOU, Chongfu, Avon Lake, Ohio 44012 (US); FLAGG, Daniel, Avon Lake, Ohio 44012 (US)
(74) Representative: Winter, Brandl - Partnerschaft mbB
(86) International application number: PCT/US2019/034294
(87) International publication number: WO 2019/231984

(56) References cited:
- CN-A- 103 507 348
- CN-A- 104 672 846
- CN-U- 205 710 560
- DE-U1-202014 009 839
- US-A1- 2009 320 397
- US-A1- 2018 072 922

## Description

### FIELD OF THE INVENTION

The present invention concerns a layer or layers of Continuous Fiber Reinforced Thermoplastic (CFRTP) tape in a single or multi-ply configuration, wherein the tape is flame retardant.

### BACKGROUND OF THE INVENTION

People benefit from plastic articles. From their invention in the mid-20th Century until the present, thermoplastic polymers have become the composition of many consumer products. Such products are relatively lightweight, sturdy, and corrosion resistant.

Continuous fiber reinforced thermoplastic ("CFRTP") tapes and sheets of single-ply or multi-ply configuration have been used for automotive, trucking, train, boat, aerospace, sporting goods, and building & construction applications due to their light weight, exceptional strength, impact resistance, and recyclability.

CFRTP tapes of multi-ply configurations such as 0°-90° x-ply or 0°-90°-0° tri-ply are commonly used because they have more balanced mechanical properties along both X and Y directions of the tape than a CFRTP single-ply tape.

CFRTP multi-ply tapes based on thermoplastic polyesters such as polyethylene terephthalate glycol (PETG) copolymer have been commercialized by Polystrand, now a business of PolyOne Corporation. The composite tapes of single-ply or the composite tapes of multi-ply configuration, made from amorphous PETG polymer and continuous and unidirectionally positioned glass fibers, have excellent stiffness and toughness, good chemical resistance, and good thermal bond-ability to other substrates including wood, steel, glass, and other polar plastic surfaces, which allows ease of adhering the CFRTP tape of PETG to the other substrates for various structurally reinforced applications.

### SUMMARY OF THE INVENTION

What the art needs is to provide flame retardance to PETG CFRTP tape without otherwise adversely affecting physical properties of the CRFTP tape which has provided the tape's commercial success. Moreover, the art currently prefers that flame retardance be provided in the form of a non-halogen flame retardant (NHFR) to minimize the release of halogens, such as chlorinated or brominated chemicals, during high heat or combustion conditions. Halogenated flame retardants are becoming disfavored or highly regulated due to concerns about toxicity, persistence, and bioaccumulation.

One aspect of the invention is a non-halogenated flame retardant (NHFR) continuous fiber reinforced thermoplastic (CFRTP) tape, comprising (1) a polymer compound and (2) a plurality of continuous, unidirectional reinforcing glass fibers embedded within the polymer compound; wherein the polymer compound comprises (a) glycol modified polyethylene terephthalate (PETG) copolymer; (b) polyphosphonate homopolymer; (c) optional smoke suppressant; and (d) optional additives, wherein the CFRTP tape has a Class A value when tested according to ASTM E84.

Embodiments of the invention are explained with the use of drawings.

### BRIEF DESCRIPTION OF THE DRAWING

FIG. 1 is a cutaway view of at least two layers of a multi-ply CFRTP tape.
FIG. 2 is a cutaway view of at least three layers of a multi-ply CFRTP tape.

### EMBODIMENTS OF THE INVENTION

### Polymer

CFRTP tape for this invention begins with glycol modified polyethylene terephthalate (PETG) commercially available from Eastman Chemical in a number of grades marketed under the Eastar^{™} brand. Presently preferred is Eastar^{™} 5011 copolyester because it is amorphous, has a specific gravity of about 1.28, has good mechanical properties and very low haze and high transmittance. The glass transition temperature is about 78°C.

### Glass Fiber

Non-limiting examples of the glass fiber are e-glass and s-glass. Individual glass fiber diameters can range from about 10 µm (also called microns) to about 25 µm and preferably from about 14 µm to about 18 µm. The glass fibers can be introduced into the PETG thermoplastic in the form of rovings. The glass fiber reinforcement can comprise continuous fibers or both continuous fibers and discontinuous fibers depending on the amount of reinforcement needed. The diameters of glass fiber and continuity in the various layers of CFRTP tape can be the same or different depending on choice of the polymer engineer.

The glass fibers can comprise from about 50 weight percent to about 65 weight percent and preferably from about 55 weight percent to about 62 weight percent of a tape layer in the laminate of the present invention, with the remaining weight percentage being the PETG thermoplastic resin, the NHFR, and also minor amounts, if any, of optional functional additives. The weight percent content of glass fiber in the various tape layers can be the same or different depending on choice of the polymer engineer.

The continuous reinforcing glass fibers can comprise from about 30 volume percent to about 75 volume percent and preferably from about 35 volume percent to about 55 volume percent of each layer of the sheet, with the remaining volume percentage being the thermoplastic polymer serving as the matrix including minor amounts, if any, of optional functional additives. The volume percent content of continuous reinforcing fiber in the various layers of the sheet can be the same or different depending on choice of the polymer engineer.

### Non-Halogenated Flame Retardant

Flame retardancy is particularly important when thermoplastic polymers are made into plastic articles which are present in occupied structures or where valuable tangible personal property is located. The purpose of flame retardance is to slow down or perhaps extinguish any combustion or melting of the plastic article. Retardance of combustion can allow for more complete evacuation from the occupied structure or removal of the valuable property.

NHFR chemicals are currently in favor, especially chemicals which are based on phosphorus. Among phosphorus-based NHFR chemicals, in this invention, the use of polyphosphonates is preferred because the phosphorus content is within a polymer, a macromolecule less likely to migrate in the polymer resin during use. Moreover, polyphosphonate homopolymers are sold in pellet form, much preferred over powder form, to allow facile feeding of the flame retardant into melt-mixing extruders, especially single-screw extruders.

Polyphosphonates are known to be sold by FRX Polymers under trade name Nofia^{®}. Nofia^{®} polyphosphonate homopolymers are known to have the following repeating unit structure, with the difference between oligomeric and homopolymeric polyphosphonates based on the weight average molecular weight (Mw) at greater than 10,500 g/mol.

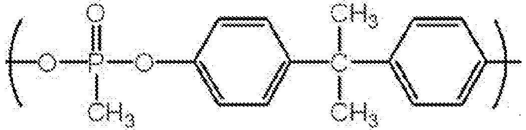

This invention has unexpectedly determined that certain grades of polyphosphonates from FRX Polymers provide, or are predicted to provide, excellent flame retardant properties of PETG based CFRTP tape as measured using ASTM E84-18 (Year 2018) test conditions, also known as the Steiner Tunnel test. The highest class of test results is Class A, in which flame spread index (FSI) is ≤ 25 and smoke-developed index (SDI) is ≤ 450.

Weight average molecular weight can be inferred from melt volume rate (MVR) of a polymer. Generally, the higher the MVR, the lower the weight average molecular weight. While FRX Polymers does not publish the weight average molecular weights of their various grades, the currently marketed oligomeric and homopolymer grades of FRX Polymers having the following MVR values have been tested for Mw and Mn and Mw/Mn.

| **Table 1** | | | | | | |
|---|---|---|---|---|---|---|
| **Grade** | **MVR*** | **Phosphorus Content** (wt. %) | **Tg** | **Mw**** | **Mn**** | **Mw/Mn** |
| | (ml/10 min) | | (°C) | (g/mol) | (g/mol) | |
| OL1001 | Not available | 8.5 | 83 | 1930 | 1238 | 1.6 |
| HM5000/ OL5000 | 14 (145°C/1.2kg) | 10.6 | 90 | 10466 | 4532 | 2.3 |
| HM7000 | 20 (200°C/1.2kg) | 10.5 | 105 | 24985 | 11798 | 2.1 |
| HM9000 | 25 (240°C/1.2kg) | 10.5 | 105 | 27388 | 13889 | 2.0 |
| HM1100 | 10 (240°C/1.2kg) | 10.5 | 105 | 98477 | 15778 | 6.3 |

| | | | | | | |
|---|---|---|---|---|---|---|
| * MVR data reported here is based on the datasheet for these Nofia^{™} HM grades. While generally there is an inverse trend between MVR (if measured at the same condition) and Mw, the measurements of MVR in this instance are affected by the differences in temperature because of large melt flow differences between these grades. **Molecular weight data of Nofia^{™} HM series were measured by GPC method using tetrahydrofuran as solvent and monodispersed polystyrenes as the calibration standard. Presently, there is a significant gap in Mw and Mn for the commercial products of the OL5000 oligomer and HM7000 homopolymer. Those of skill in the art will be able to determine sufficient molecular weights and polydispersity by measuring Mw and Mn using the GPC method. Therefore, the claimed invention is conditional on the performance of the polyphosphonate homopolymer to achieve a Class A value in ASTM E84 testing. | | | | | | |

FRX Polymers distinguishes the polyphosphonate homopolymers (i.e., HM grades) from copolymer grades and reactive oligomer grades. The present invention employs the polyphosphonate grades which use the HM nomenclature because of the unexpected results as reported in the Examples. The weight average molecular weight of the polyphosphonate homopolymer useful in the claimed invention can be any amount greater than 10,500, desirably greater than 15,000, and preferably greater than 20,000 g/mol.

### Optional Additives

The thermoplastic matrices of the layers of the tape of the present invention can include conventional plastics additives in an amount that is sufficient to obtain a desired processing or performance property for the compound. The amount should not be wasteful of the additive nor detrimental to the processing or performance of the compound. Those skilled in the art of thermoplastics compounding and especially CFRTP, without undue experimentation but with reference to such treatises as Plastics Additives Database (2004) from Plastics Design Library (elsevier.com), can select from many different types of additives for inclusion into the compounds of the present invention.

Non-limiting examples of optional additives include adhesion promoters; biocides (antibacterials, fungicides, and mildewcides), anti-fogging agents; anti-static agents; bonding, blowing and foaming agents; dispersants; fillers and extenders; fire and flame retardants and smoke suppressants; impact modifiers; initiators; lubricants; micas; pigments, colorants and dyes; plasticizers; processing aids; release agents; silanes, titanates and zirconates; slip and anti-blocking agents; stabilizers; stearates; ultraviolet light absorbers; viscosity regulators; waxes; and combinations of them.

To the extent that smoke generation during combustion is an issue, conventional smoke suppressants can be included in the formulation of the tape.

Table 2 shows acceptable, desirable, and preferable ranges of ingredients useful for NHFR CFRTP tapes, all expressed in weight percent (wt. %) of the entire tape or of the entire polymer, respectively. The tape or the polymer, respectively, can comprise, consist essentially of, or consist of these ingredients. Any number between the ends of the ranges is also contemplated as an end of a range, such that all possible combinations are contemplated within the possibilities of Table 2 as candidate tapes and polymers, respectively, for use in this invention.

| **Table 2** | | | |
|---|---|---|---|
| **Tape** | **Acceptable** | **Desirable** | **Preferable** |
| Continuous Glass Fiber | 45-65 | 53-63 | 55-62 |
| Polymer Compound | 35-55 | 37-47 | 38-45 |
| | | | |

| **Polymer Compound** | **Acceptable** | **Desirable** | **Preferable** |
|---|---|---|---|
| PETG | 58-95 | 71-92 | 77-92 |
| NHFR | 5-30 | 8-20 | 8-15 |
| Optional Smoke Suppressants | 0-5 | 0-4 | 0-3 |
| Optional Other Additives | 0-7 | 0-5 | 0-5 |

The preferred range of polyphosphonate NHFR can be between 8% and 15% with respect to the total weight of the polymer compound if the CFRTP tape has a Class A rating when tested according to ASTM E84. It is desirable to have minimum polyphosphonate NHFR loading in the polymer compound for a PETG CFRTP with glass fiber content of around 58% but have a sufficient amount to get a Class A rating (especially to have flame spread index ≤25) per ASTM E84. Because of manufacturing variability and because of inherent testing variability of the ASTM E84 test, if the sufficient amount is 5% or 6% or 7% or 8% or 9% or 10% or 11% or 12% or 13% or 14% and also the Class A value is achieved, then the polymer compound with that sufficient amount of polyphosphonate homopolymer is part of the current invention.

Moreover, as seen in the data reported in the Examples below, it has been found that a lower concentration of polyphosphonate in the polymer compound corresponds to lower smoke index, a key part of the ASTM E84 test protocol. Thus, it is unexpected that there is a balance between performance of flame spread and smoke release in the use of an appropriate amount of polyphosphonate homopolymer as the chosen NHFR in that appropriate "sufficient amount."

### Processing

Each layer of the tape can be made by a pultrusion process in which the continuous pulling of strands through a polymeric bath permits formation of tapes, sheets, or other extruded shapes of strands reinforcing the polymer which has fused around such strands in such extruded shape. A number of companies make pultruded reinforced polymer composites, including PolyOne Corporation via its Advanced Composites Group, particularly its Polystrand^{™} business selling thermoplastic fiber reinforced composites. Examples of pultrusion methods, materials and techniques are provided in U.S. Pat. Nos. 5,084,222; 5,556,496; 6,955,735; 8,663,414; and 9,393,741; U.S. Patent Application Publication US20170037208; and PCT Patent Publication WO2017180784. An example of making composites from rolls of tape is found in U.S. Pat. No. 9,333,732 (Pilpel et al.) An example of joining tapes to substrates is found in U.S. Patent Application Publication US2015165731 (Pilpel et al.).

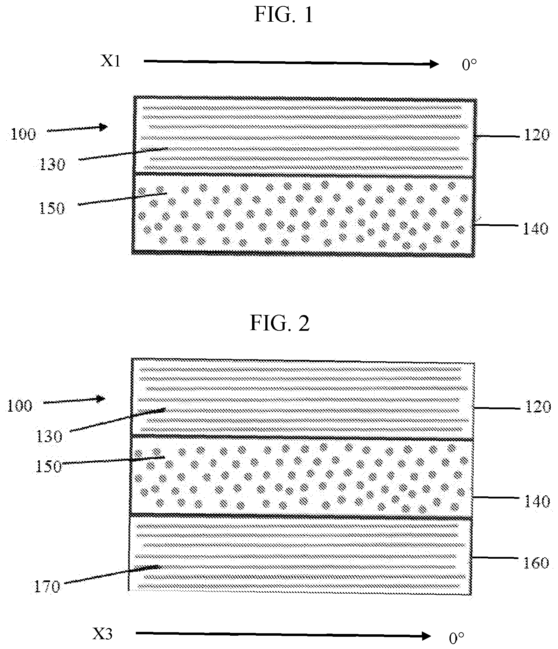

Referring to FIG. 1, the multi-ply tape 100 has a first layer 120 containing a plurality of continuous, unidirectional reinforcing fibers 130 oriented in substantially parallel array along an X1 direction (also referred to as 0° direction of the multi-ply) to provide a continuous fiber reinforcement.

The tape 100 also has a second layer 140 containing a plurality of continuous, unidirectional reinforcing fibers 150 also oriented in substantially parallel array along an X2 direction (emerging from the document whereby only the ends are seen) also to provide a continuous fiber reinforcement.

The tape 100 has at least first layer 120 and second layer 140 in adjacent relationship, wherein the X1 and X2 directions differ by at least 45°, with 90° shown in FIG. 1.

There can be more than two layers to the multi-layer tape. In one embodiment, the tape can contain a third layer, wherein the third layer also has a continuous fiber reinforcement with an orientation X3 which is the same as or different from X1, X2 or both. More specifically as seen in FIG. 2, the tape 100 can have an optional a third layer 160 adjacent to the second layer 140 containing a plurality of continuous, unidirectional reinforcing fibers 170 also oriented in substantially parallel array along an X3 direction. In FIG. 2, the X3 direction is the same as the X1 direction with the X2 direction perpendicular to both.

Any third layer 160 can be in adjacent relationship with either first layer(s) 120 or second layer(s) 140 or both in the multi-ply.

Other embodiments can be 4 or more layers, with the additional layer being the same as layer 120, or 140, or 160 or a new layer of X4 orientation. The concept of this type of multi-ply tape can continue in various numbers and combinations of layers within the contemplation of a person having ordinary skill in the art without undue experimentation.

Other embodiments arrange for the X1 and X2 directions to differ by any degree between 45° and 90°, without the necessity of enumerating every such degree in between 46 and 90 degrees. The direction of the curvature or strain retained in the multi-ply tape in the useful applications should be aligned approximately along X1 direction with no more than a 10° deviation.

Any possible combination of these various embodiments of reinforcement directions of the layers is specifically contemplated in this invention without the necessity of repeating every possible combination.

As explained above, for X-ply layers of tape 100 seen in Fig. 1, two layers of reinforced polymer are joined together in a variety of relative orientations of fiber reinforcement to form a single multi-ply tape configuration.

The unidirectional orientation or alignment of fibers 120 in the thermoplastic matrix (i.e., X1 direction) can be defined as the reference direction, or 0° direction of the multi-ply tape. The orientations of continuous reinforcing fibers in the other layers of the multi-ply are identified relative to the reference direction depending on the rotation angle of each of the other layers relative to the reference direction.

The lamination of multiple layers relative to their respective orientations is a significant determining factor to the strength, flexibility, and other physical properties of the reinforced thermoplastic composite laminate as it is used in particular architectural or construction assemblies.

Non-limiting examples of the number of layers can range from 2 to 20 layers with orientations of any combination of 0° and 90° and any angles between them. Thus, this invention is not limited to any particular number of layers in the composite nor any particular combination of orientations of layers in the composite.

With the nomenclature explained, one popular multi-ply tape is a 4-ply tape with 0°/90°/90°/0° configuration, with the first layer 120 and third layer 160 (the outermost layers in this case) having continuous reinforcing fibers along 0° and with two second layers 140 (the middle layers) having continuous reinforcing fibers along 90° direction. In the field applications of the multi-ply tape of the invention, the tape may be under a constantly applied curvature or strain (of bending, tensile, or compression type) that is approximately along the direction of the first layer (0°) of the multi-ply where the angular deviation of the applied strain is within +/- 10°.

Individual layers 120 may include a plurality of continuous glass reinforcing fiber strands each extending in a predetermined uniform direction. The strands in 0° alignment are preferably continuous in that they extend along the length of the tape 100 uninterrupted and preferably unidirectional.

The thicknesses (Z direction) of each of the layers 120 and 140 and 160 can be determined by an ordinary person skilled in the art of reinforced composite structures. Any possible combination of thicknesses of the layers 120 and 140 and optionally 160 in forming tape 100 is possible.

For example, a tape 100 could be made using a 0°/90°/0° orientation of the three layers with the sole inside layer being of a different thickness than the two outside layers, or vice versa, or of three different thicknesses.

While a tape is described herein as being formed of 2 or more layers of reinforced thermoplastic with layers of different reinforcement direction and different thermoplastic materials, it is within the contemplation of the present invention that the number of layers could be varied from at least two to as many as 20 in order to create the desired strength and flexibility.

The orientations of each layer, expressed in angular degrees deviated from the direction of the first layer (0°), can vary as determined without undue experimentation by a person having ordinary skill in the art after understanding this disclosure. In one embodiment, orientation of each of the other layers can be any angle between 45° and 90° or between -45° and -90°.

Stated generically with respect to the four layers, the orientation can be 0°/45° or greater/ 45° or greater/ 0° where the first layers (0° layers) are the outermost layers.

Stated more generically with respect to three layers or more, the orientation can be 0°/ (45° or greater times n) (0° times m)/ 0°, where n is between 1 and 8 and m is between 0 and 7 where the first layers are the outermost layers. Yet, stated even more generically with respect to three layers or more, the orientation can be 45° or greater/ (0° times n) (45° or greater times m)/45° or greater, where n is between 1 and 8 and m is between 0 and 7 where the first layer(s) is not (or are not) the outermost layer(s).

Possessed of these possibilities, a person having ordinary skill in the art of making fiber reinforced composites could construct without undue experimentation any possible combination layers in a tape for polymer engineering performance.

### USEFULNESS OF THE INVENTION

CFRTP tapes of multi-ply configuration can now be better used for many applications that require a combination of good mechanical properties, good ESC resistance, good thermal resistance, and excellent flame retardance. Yet the CFRTP tape can still be cost effective. As stated above, end use applications can be automotive, trucking, train, aerospace, and building & construction applications due to their light weight, exceptional strength, impact resistance, recyclability, and flame retardance at the highest class of the ASTM E84 test.

CFRTP tapes can be used without additional laminating layers or can benefit from lamination or coating with layers of other materials, such as polymeric films or organic coatings, wood, metal, and ceramic, all depending on the end use contemplated for the tape structure.

Presently preferred is a NHFR PETG CFRTP having a total thickness ranging from 5 mils to 200 mils (0.127 mm to 5.0 mm), and more preferably 8 mils to 50 mils (0.203 mm to 1.27 mm). To achieve such total thickness, single or multiple plies may be used with a variety of orientations of the plies as explained above and exemplified below. The thickness of the samples used in Examples and Comparative Examples of this invention is ranged between 32 mil to 40 mil (0.81 mm to 1.01 mm).

Any of the tapes described above can be used to make NHFR laminate panels when such tapes are affixed to foamed substrates or honeycomb structured substrates, which are based on PET, PETG, polycarbonate, polystyrene, melamine, or polyurethane material. Those skilled in the art of making laminated reinforced composites without undue experimentation can determine which type of composites to make, especially those laminated composites wherein there is no adhesive required between the CFRTP tape and the foamed or honeycomb structured substrate. That same preferred affixing without adhesive can also be embodied in a laminate panel of any of the tapes with a substrate based on wood, as disclosed in a non-halogenated flame retardant (NHFR) laminate panel that comprises the tapes of the disclosure and a wood based substrate (lumber wood or engineered wood) wherein there is no adhesive required between the tape and the wood based substrate as taught in U.S. Patent Application Publication US2015165731 (Pilpel, et al.).

### EXAMPLES

Table 3 shows the formulations tested. Table 4 shows the results of testing of tapes. The unidirectional CFRTP tapes of the Examples were made using a single screw extruder, having 2.5 inch (6.3 cm) diameter screw with LID ratio of 24:1, and 4 heated barrel zones operating at a temperature of about about 580°F (305°C), in order to melt and mix the ingredients of the polymer compound which was then fed into a fiber impregnation device where the web formed by continuous, unidirectional glass fibers were pulled through and wetted by the melt of the polymer compound before cooling to form the tapes. Multi-layer tapes were further made by cutting and laminating multiple unidirectional CFRTP tapes according to the angle of orientation of glass fiber configuration in each unidirectional CFRTP tape layer relative to that of a reference unidirectional CFRTP tape layer being 0° or in the X1 direction as seen in FIG 1.

The following ASTM tests were used:
Flexural Tests: ASTMD790 on Six-Ply Tape of 0°/0°/0°/0°/0°/0° configuration.

Dynatup Impact Test: ASTM D3763 on Four-Ply Tape of 0°/90°/90°/0° configuration.

NBS Smoke chamber test (flaming mode): ASTM E662 on Four-Ply Tape of 0°/90°/90°/0° configuration.

Cone Calorimetry: ASTM E1354 on Four-Ply Tape of 0°/90°/90°/0° configuration. (Mahre (kW/m²); Peak Heat release rate (kW/m²); Mean SEA (m²/kg); and Total smoke release (m²/m²)).

Limiting Oxygen Index (LOI): ASTM D2863 on Four-Ply Tape of 0°/90°/90°/0° configuration.

FAA vertical burn - 60 second: FAR 25.853 on Four-Ply Tape of 0°/90°/90°/0° configuration.

Steiner Tunnel Test: ASTM E84 on Four-Ply Tape of 0°/90°/90°/0° configuration. The ASTM Test E84 undergoes revision from time to time. The version of ASTM Test E84 used in the testing is ASTM E84-18.

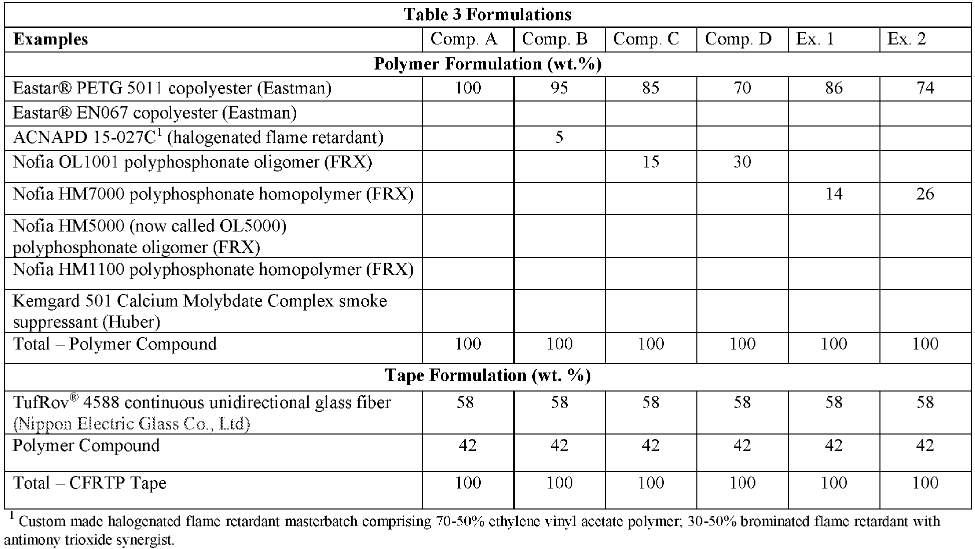

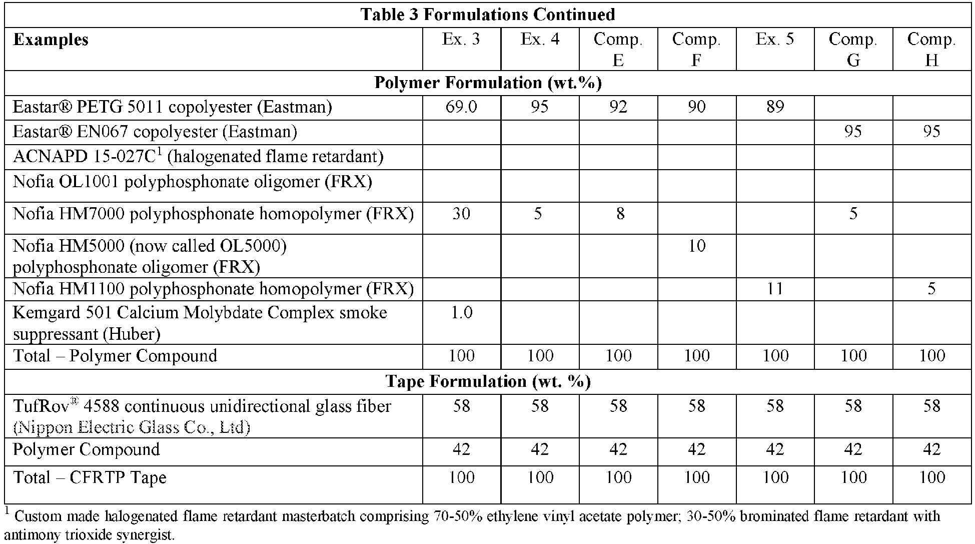

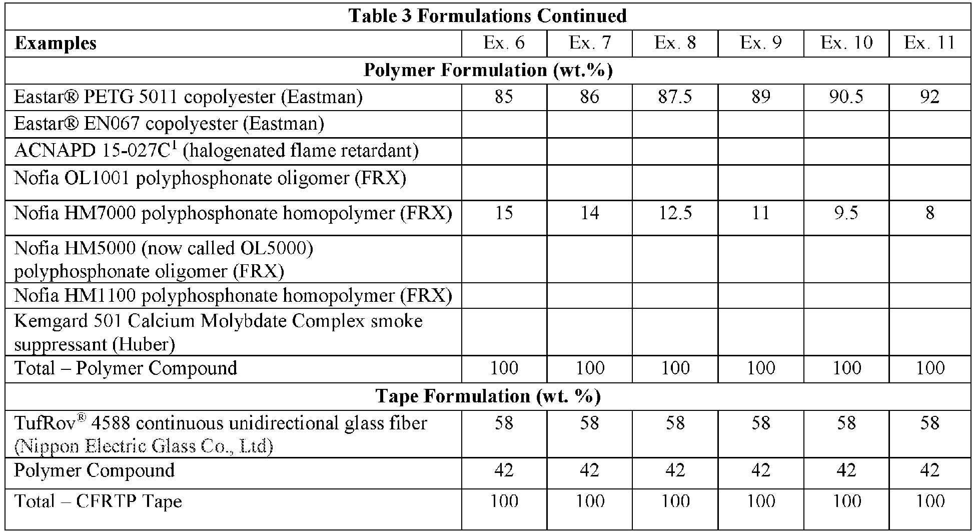

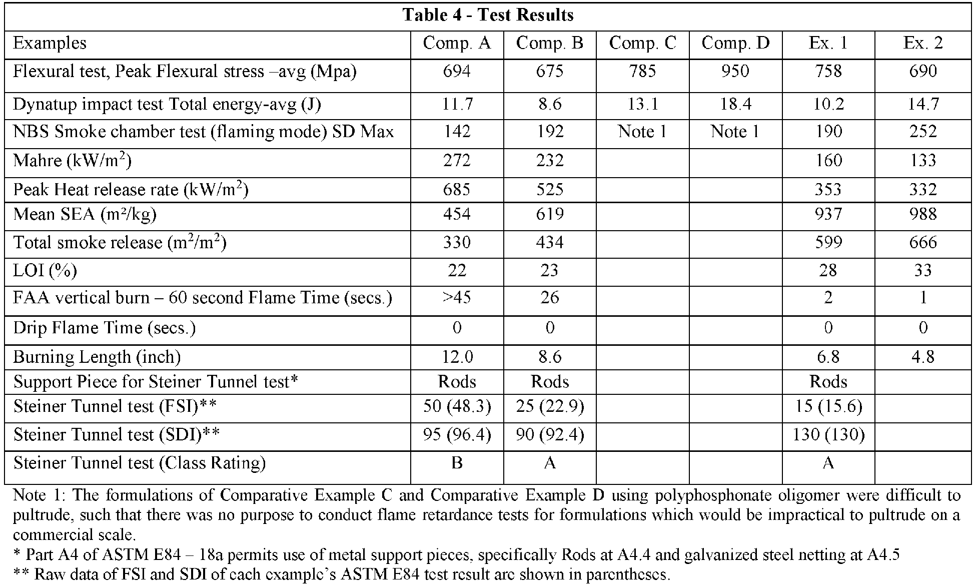

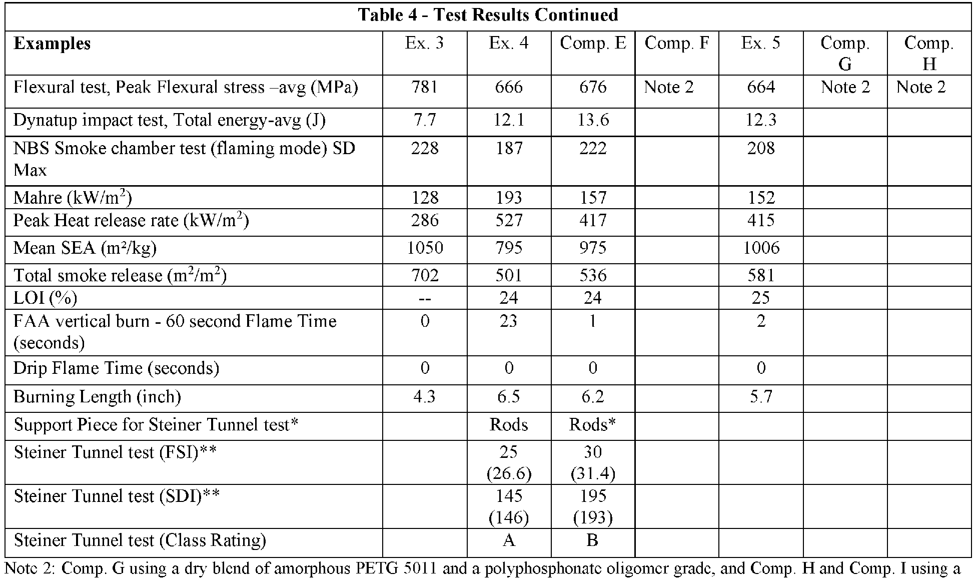

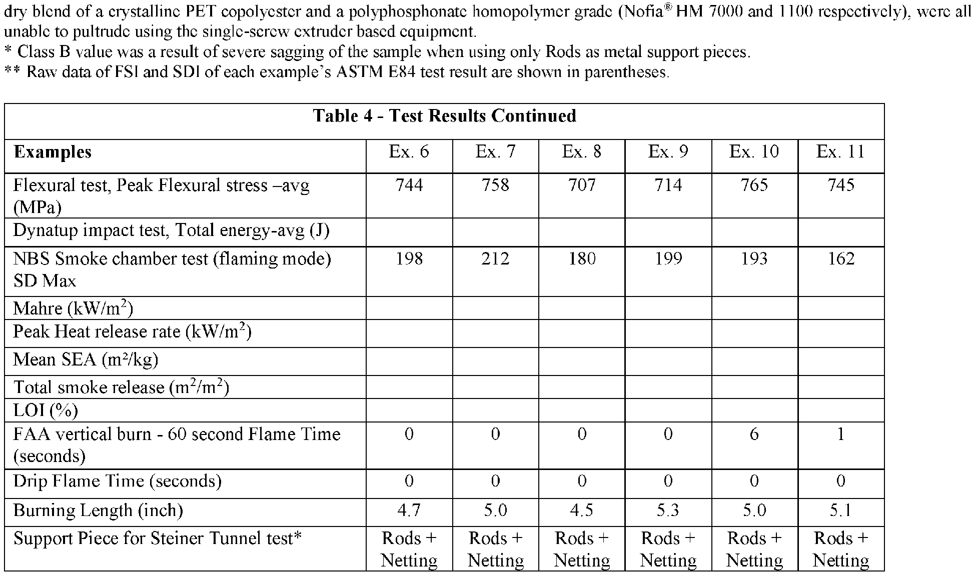

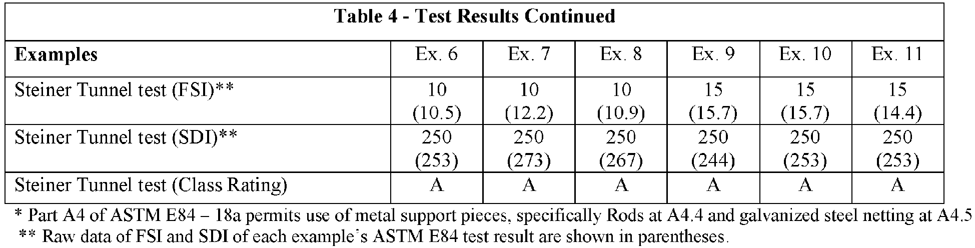

Comparative Example A results in Class B ASTM E84, which is unacceptable. Comparative Example B may have Class A ASTM E84, but with the use of halogenated flame retardant. Comparative Examples C, D, and F were unacceptable because use of the FRX oligomeric phosphonate along with PETG 5011 resin did not permit successful pultrusion on the equipment based on a single-screw extruder.

Comparative Examples G and H were unacceptable because a dry blend of a crystalline PET resin grade (Eastar^{®} EN067) and polyphosphonate homopolymer resin (Nofia^{®} HM 7000 and 1100) did not permit successful pultrusion either on the same equipment. While not limited to a particular theory, it is believed that use of a dry blend of thermoplastic base resin pellets (PETG in this case) and flame retardant resin pellets (polyphosphonate homopolymer in this case) that have similar melt processing temperature ranges (if individually processed) is important for successful pultrusion on a single-screw extruder based equipment. If the flame retardant additive (such as polyphosphonate homopolymer) is otherwise compounded into a master-batch resin using a crystalline PET carrier resin, and then a dry blend of the master-batch pellets and crystalline PET base resin (such as Eastar^{®} EN067) is fed in the single screw extruder, the pultrusion process should work as well.

Comparative Example E sagged during testing because the use of metal support pieces in Part A4 of ASTM E84 was limited to rods only (Paragraph A4.4). However, Example 4 with only rod support did (barely) pass ASTM E84 Class A Rating. The result of Example 4 permits a polyphosphonate homopolymer at 5 weight percent loading to be a "sufficient amount" for purposes of this invention. Moreover, the result of Example 11 shows a polyphosphonate homopolymer at 8 weight percent loading to be a desirable "sufficient amount" for purposes of this invention.

While not limited to a particular theory, it is believed that phosphonate oligomers have insufficient weight average molecular weight to permit successful pultrusion of tapes of those formulations event at 15 and 30 weight percent of oligomer. This is unexpected because the oligomer is intentionally reactive.

The successful tests used polyphosphonate homopolymer grades in sufficient amounts as discussed above. The Class A ASTM E84 grade achieved for Example 1 using 14 weight percent of a polyphosphonate homopolymer grade indicates that a formulation using 26 or 30 weight percent would also likely achieve a Class A rating, based the Cone Calorimetry test results. Stated alternatively, given the FSI and SDI test results within the ASTM E84 test protocol and correlation in Example 1 between Cone Calorimetry and Steiner Tunnel tests, it is contemplated that the Steiner Tunnel tests for Examples 2 and 3 will also result in Class A ASTM E84.

The results of Examples 6-11 make it plain that a Class A rating for ASTM E84 is achieved throughout the range of weight percents from 8 weight percent through 15 weight percent. In the case of Example 11, the test is a repeat of the test of Comparative Example E, except that the use of metal support pieces includes both rods and galvanized steel netting, as permitted by ASTM E84 Part A4.

There is a clear trend that the Total Smoke Release value, one of the Cone Calorimetry test results, increases with increasing loading of the same polyphosphonate homopolymer (HM7000) when comparing the weight percentage of loading with Total Smoke Release: Comparative Example A (0%-- 330), Example 4 (5% -- 501), Comparative Example E (8% -- 536), Example 1 (14% -- 599), Example 2 (26% -- 666), and Example 3 (30% -- 702). The difference in formulation between Example 2 and Example 3 is the presence of smoke suppressant in Example 3, with deviation of results customary for the particular smoke suppressant used. Thus, smoke suppressants are optional depending on the results conducted by one skilled in polymer compounding without undue experimentation.

Therefore, an unexpected result is that reducing the amount polyphosphonate homopolymer reduces smoke release but limiting the amount too much will result in an ASTM E84 test result which is not Class A, even if testing occurs using metal support pieces of both rods and netting. A Class A rating for ASTM E84 regardless of metal support pieces used is necessary for the formulation to be within the scope of the claimed invention.

Moreover, considering Comparative Examples C, D and F, using the dry blend of a low molecular weight (weight-average Mw < 10, 500) polyphosphonate oligomer resin and PETG resin does not successfully pultrude on a single-screw extruder based equipment.

Therefore, based on these experimental results, a person having ordinary skill in the art without undue experimentation can tailor a choice of polyphosphonate homopolymer grade of sufficient weight-average molecular weight with an amount of such grade in a sufficient amount (e.g., about 5 weight percent to provide a balance of both the amount of flame retardance (ASTM E84 Class A Rating) and the amount of smoke released and detected (Total Smoke Release).

The invention is not limited to the above embodiments and examples. The claims follow.

## Claims

1. A non-halogenated flame retardant (NHFR) continuous fiber reinforced thermoplastic (CFRTP) tape, comprising:
(1) a polymer compound and
(2) a plurality of continuous, unidirectional reinforcing glass fibers embedded within the polymer compound;
wherein the polymer compound comprises:
(a) glycol modified polyethylene terephthalate (PETG) copolymer;
(b) polyphosphonate homopolymer;
(c) optional smoke suppressant; and
(d) optional additives
wherein the CFRTP tape has a Class A value when tested according to ASTM E84.

2. The CFRTP tape of Claim 1, wherein the polyphosphonate homopolymer has a weight average molecular weight (Mw) measured as specified in the description ranging from 10,500 g/mol. to 100,000 g/mol.

3. The CFRTP tape of Claim 1 or Claim 2, wherein the polyphosphonate homopolymer has a weight average molecular weight (Mw) measured as specified in the description ranging from 15,000 g/mol. to 100,000 g/mol.

4. The CFRTP tape of Claim 3, wherein the polyphosphonate homopolymer has an Mw/Mn ratio measured as specified in the description ranging from 2 to 6.

5. The CFRTP tape of any one of Claims 1-3, wherein the weight percent of the polyphosphonate homopolymer in the polymer compound ranges from 5 to 30.

6. The CFRTP tape of any one of Claims 1-3, wherein the weight percent of the polyphosphonate homopolymer in the polymer compound ranges from about 5 to 20.

7. The CFRTP tape of any one of Claims 1-3, wherein the weight percent of the polyphosphonate homopolymer in the polymer compound ranges from 8 to 15.

8. The CFRTP tape of any one of Claims 1-7, further comprising a smoke suppressant in a weight percentage of the polymer compound ranging from about 1 to 7.

9. The CFRTP tape of any one of Claims 1-8, wherein the optionally additive is selected from the group consisting of adhesion promoters; anti-fogging agents; anti-oxidants; anti-static agents; biocides; bonding, blowing or foaming agents; clays; dispersants; fibers; fillers and extenders;; impact modifiers; initiators; lubricants; micas; pigments and colorants; plasticizers; processing aids; release agents; silanes, titanates and zirconates; silicates; slip and anti-blocking agents; stabilizers; stearates; ultraviolet light absorbers; viscosity regulators; waxes; and combinations of them.

10. The CFRTP tape of any one of Claims 1-9, wherein the glass fibers have individual diameters ranging from about 10 µm to 25 µm.

11. The CFRTP tape of any one of Claims 1-9, wherein the continuous glass fibers are embedded in the PETG, wherein the glass fibers have individual diameters ranging from 10 µm to 25 µm.

12. The CFRTP tape of Claim 10, wherein the glass fibers in the CFRTP tape comprise from about 55 weight percent to about 62 weight percent of the tape.

13. The CFRTP tape of any one of Claims 1-12, wherein the CFRTP tape has a thickness of from 0.127 mm to 5.0 mm.

14. The CFRTP tape of Claim 13, wherein the CFRTP tape has a thickness of from 0.203 mm to 1.27 mm.

15. The CFRTP tape of any one of Claims 1-14, wherein the CFRTP tape is a multi-ply tape having at least one layer oriented in a 0° direction and at least one layer oriented in a 90° direction.

16. The tape of Claim 15, wherein the multi-ply tape comprises two layers, three layers, four layers, five layers, six layers, or seven layers.

17. A non-halogenated flame retardant (NHFR) laminate panel that comprises the tape of Claims 1-16 and any one or more of a foam or honeycomb structured substrate based on PETG, PET, polycarbonate, polystyrene, melamine, or polyurethane.

18. A non-halogenated flame retardant (NHFR) laminate panel that comprises the tape of Claims 1-16 and a substrate based on wood.

## Patentansprüche

1. Halogenfrei flammgehemmtes (NHFR) endlosfaserverstärktes thermoplastisches (CFRTP) Band, umfassend:
(1) ein Polymercompound und
(2) eine Vielzahl von kontinuierlichen, unidirektional verstärkenden Glasfasern, die in dem Polymercompound eingebettet sind;
wobei das Polymercompound umfasst:
(a) glykolmodifiziertes Polyethylenterephthalat (PETG)-Copolymer;
(b) Polyphosphonat-Homopolymer;
(c) optional ein Rauchunterdrückungsmittel; und
(d) optionale Zusatzstoffe
wobei das CFRTP-Band einen Wert der Klasse A aufweist, wenn es gemäß ASTM E84 getestet wird.

2. CFRTP-Band nach Anspruch 1, wobei das Polyphosphonat-Homopolymer ein wie in der Beschreibung angegeben gemessenes gewichtsmittleres Molekulargewicht (Mw) im Bereich von 10.500 g/mol bis 100.000 g/mol aufweist.

3. CFRTP-Band nach Anspruch 1 oder Anspruch 2, wobei das Polyphosphonat-Homopolymer ein wie in der Beschreibung angegeben gemessenes gewichtsmittleres Molekulargewicht (Mw) im Bereich von 15.000 g/mol bis 100.000 g/mol aufweist.

4. CFRTP-Band nach Anspruch 3, wobei das Polyphosphonat-Homopolymer ein wie in der Beschreibung angegeben gemessenes Mw/Mn-Verhältnis im Bereich von 2 bis 6 aufweist.

5. CFRTP-Band nach einem der Ansprüche 1 bis 3, wobei die Gewichtsprozente des Polyphosphonat-Homopolymers in dem Polymercompound im Bereich von 5 bis 30 liegen.

6. CFRTP-Band nach einem der Ansprüche 1 bis 3, wobei die Gewichtsprozente des Polyphosphonat-Homopolymers in dem Polymercompound im Bereich von 5 bis 20 liegen.

7. CFRTP-Band nach einem der Ansprüche 1 bis 3, wobei die Gewichtsprozente des Polyphosphonat-Homopolymers in dem Polymercompound im Bereich von 8 bis 15 liegen.

8. CFRTP-Band nach einem der Ansprüche 1 bis 7, das ferner ein Rauchunterdrückungsmittel im Bereich von 1 bis 7 Gewichtsprozent des Polymercompounds umfasst.

9. CFRTP-Band nach einem der Ansprüche 1 bis 8, wobei das optionale Additiv ausgewählt ist aus der Gruppe bestehend aus Haftvermittlern; Antibeschlagmitteln; Antioxidantien; Antistatikmitteln; Bioziden; Haft-, Bläh- oder Schaummitteln; Tonen; Dispergiermitteln; Fasern; Füllstoffen und Streckmitteln; Schlagzähigkeitsmodifikatoren; Initiatoren; Schmiermitteln; Glimmer; Pigmenten und Farbstoffen; Weichmachern; Verarbeitungshilfsmitteln; Trennmitteln; Silanen, Titanaten und Zirkonaten; Silikaten; Gleit- und Antiblockmitteln; Stabilisatoren; Stearaten; Ultraviolettlichtabsorbern; Viskositätsregulatoren; Wachsen und Kombinationen davon.

10. CFRTP-Band nach einem der Ansprüche 1 bis 9, wobei die Glasfasern Einzeldurchmesser im Bereich von 10 µm bis 25 µm aufweisen.

11. CFRTP-Band nach einem der Ansprüche 1 bis 9, wobei die Endlosglasfasern in das PETG eingebettet sind, wobei die Glasfasern Einzeldurchmesser im Bereich von 10 µm bis 25 µm aufweisen.

12. CFRTP-Band nach Anspruch 10, wobei die Glasfasern in dem CFRTP-Band 55 Gewichtsprozent bis 62 Gewichtsprozent des Bandes ausmachen.

13. CFRTP-Band nach einem der Ansprüche 1 bis 12, wobei das CFRTP-Band eine Dicke von 0,127 mm bis 5,0 mm aufweist.

14. CFRTP-Band nach Anspruch 13, wobei das CFRTP-Band eine Dicke von 0,203 mm bis 1,27 mm aufweist.

15. CFRTP-Band nach einem der Ansprüche 1 bis 14, wobei das CFRTP-Band ein mehrlagiges Band ist, das mindestens eine in einer 0°-Richtung orientierte Schicht und mindestens eine in einer 90°-Richtung orientierte Schicht aufweist.

16. Band nach Anspruch 15, wobei das mehrlagige Band zwei Schichten, drei Schichten, vier Schichten, fünf Schichten, sechs Schichten oder sieben Schichten umfasst.

17. Halogenfrei flammgehemmte (NHFR) Laminatplatte, die das Band gemäß den Ansprüchen 1 bis 16 und eines oder mehrere von einem Schaum- oder Wabenstruktursubstrat auf der Basis von PETG, PET, Polycarbonat, Polystyrol, Melamin oder Polyurethan umfasst.

18. Halogenfrei flammgehemmte (NHFR) Laminatplatte, die das Band gemäß den Ansprüchen 1 bis 16 und ein Substrat auf Holzbasis umfasst.

## Revendications

1. Bande en thermoplastique renforcé de fibres continues (CFRTP) à agent ignifuge non halogéné (NHFR), comprenant :
(1) un composé polymère et
(2) une pluralité de fibres de verre de renforcement unidirectionnelles continues incorporées dans le composé polymère ;
dans lequel le composé polymère comprend :
(a) un copolymère de polyéthylène téréphtalate modifié au glycol (PETG) ;
(b) un homopolymère de polyphosphonate ;
(c) un suppresseur de fumées facultatif ; et
(d) des additifs facultatifs
dans laquelle la bande CFRTP présente une valeur de classe A lorsqu'elle est testée selon la norme ASTM E84.

2. Bande CFRTP selon la revendication 1, dans laquelle l'homopolymère de polyphosphonate présente un poids moléculaire moyen en poids (Mw) mesuré comme spécifié dans la description allant de 10 500 g/mol à 100 000 g/mol.

3. Bande CFRTP selon la revendication 1 ou la revendication 2, dans laquelle l'homopolymère de polyphosphonate présente un poids moléculaire moyen en poids (Mw) mesuré comme spécifié dans la description allant de 15 000 g/mol à 100 000 g/mol.

4. Bande CFRTP selon la revendication 3, dans laquelle l'homopolymère de polyphosphonate présente un rapport Mw/Mn mesuré comme spécifié dans la description allant de 2 à 6.

5. Bande CFRTP selon l'une quelconque des revendications 1-3, dans laquelle le pourcentage en poids de l'homopolymère de polyphosphonate dans le composé polymère est compris entre 5 et 30.

6. Bande CFRTP selon l'une quelconque des revendications 1-3, dans laquelle le pourcentage en poids de l'homopolymère de polyphosphonate dans le composé polymère est compris entre 5 et 20.

7. Bande CFRTP selon l'une quelconque des revendications 1-3, dans laquelle le pourcentage en poids de l'homopolymère de polyphosphonate dans le composé polymère est compris entre 8 et 15.

8. Bande CFRTP selon l'une quelconque des revendications 1-7, comprenant en outre un suppresseur de fumée dans un pourcentage en poids du composé polymère allant de 1 à 7.

9. Bande CFRTP selon l'une quelconque des revendications 1-8, dans laquelle l'additif facultatif est choisi dans le groupe constitué de promoteurs d'adhérence ; d'agents antibuée ; d'anti-oxydants ; d'agents antistatiques ; de biocides ; d'agents liants, gonflants ou moussants ; d'argiles ; de dispersants ; de fibres ; de charges et d'extendeurs ; de modificateurs d'impact ; d'initiateurs ; de lubrifiants ; de micas ; de pigments et de colorants ; de plastifiants ; d'auxiliaires technologiques ; d'agents de démoulage ; de silanes, titanates et zirconates ; de silicates ; d'agents antidérapants et anti-bloquants ; de stabilisants ; de stéarates ; d'absorbeurs de lumière ultraviolette ; de régulateurs de viscosité ; de cires ; et des combinaisons de ceux-ci.

10. Bande CFRTP selon l'une quelconque des revendications 1-9, dans laquelle les fibres de verre présentent des diamètres individuels allant de 10 µm à 25 µm.

11. Bande CFRTP selon l'une quelconque des revendications 1-9, dans laquelle les fibres de verre continues sont incorporées dans le PETG, dans laquelle les fibres de verre présentent des diamètres individuels allant de 10 µm à 25 µm.

12. Bande CFRTP selon la revendication 10, dans laquelle les fibres de verre dans la bande CFRTP constituent de 55 % en poids à 62 % en poids de la bande.

13. Bande CFRTP selon l'une quelconque des revendications 1-12, dans laquelle la bande CFRTP présente une épaisseur de 0,127 mm à 5,0 mm.

14. Bande CFRTP selon la revendication 13, dans laquelle la bande CFRTP présente une épaisseur de 0,203 mm à 1,27 mm.

15. Bande CFRTP selon l'une quelconque des revendications 1-14, dans laquelle la bande CFRTP est une bande à plis multiples présentant au moins un pli orienté dans une direction de 0° et au moins un pli orienté dans une direction de 90°.

16. Bande selon la revendication 15, dans lequel la bande à plis multiples comprend deux couches, trois couches, quatre couches, cinq couches, six couches ou sept couches.

17. Panneau stratifié ignifuge non halogéné (NHFR) qui comprend la bande selon les revendications 1 à 16 et un ou plusieurs parmi un substrat à structure expansée ou en nid d'abeille à base de PETG, de PET, de polycarbonate, de polystyrène, de mélamine ou de polyuréthane.

18. Panneau stratifié ignifuge non halogéné (NHFR) qui comprend la bande selon les revendications 1-16 et un substrat à base de bois.
